# FASCICULE DE BREVET EUROPEEN

(11) **EP 2 993 368 B1**
(45) Date de publication et mention de la délivrance du brevet: **26.02.2020**
(21) Numéro de dépôt: 15179834.5
(22) Date de dépôt: 05.08.2015
(51) Int. Cl.: F16D 25/0638, F16D 25/10, F16D 21/06

(54) **SYSTEME DE TRANSMISSION COMPORTANT UN MECANISME A DOUBLE EMBRAYAGE HUMIDE**
ÜBERTRAGUNGSSYSTEM, DAS EINEN MECHANISMUS MIT EINER NASSEN DOPPELKUPPLUNG UMFASST
TRANSMISSION SYSTEM COMPRISING A DUAL WET CLUTCH MECHANISM

(30) Priorité: 03.09.2014 FR 1458238
(43) Date de publication de la demande: 09.03.2016
(73) Titulaire: Valeo Embrayages, 80009 Amiens Cedex 2 (FR)
(72) Inventeur: ARHAB, Rabah, 95350 ST BRICE SOUS FORET (FR); RIBOT, Herve, 80200 PERONNE (FR); CAUMARTIN, Laurent, 80600 BEAUQUESNE (FR)
(74) Mandataire: Cardon, Nicolas

(56) Documents cités:
- DE-A1-102011 102 748
- DE-A1-102013 213 983
- US-A1- 2006 086 586

## Description

La présente invention concerne un système de transmission comportant un mécanisme à double embrayage humide.

La présente invention concerne plus particulièrement un système de transmission, notamment pour un véhicule automobile, comportant autour d'un axe au moins :
- une coquille d'entrée qui est liée en rotation à un arbre menant et à un voile d'entrainement pour lier en rotation ladite coquille d'entrée à un mécanisme à double embrayage humide qui est commandé pour accoupler sélectivement ledit arbre menant à un premier arbre mené et à un deuxième arbre mené,
ledit mécanisme à double embrayage humide comportant au moins un premier embrayage et un deuxième embrayage respectivement de type multidisques, chacun desdits premier et deuxième embrayages comportant au moins un piston mobile axialement qui est commandé en déplacement au moyen d'une chambre de commande à laquelle est associée une chambre d'équilibrage délimitée au moins par un piston d'équilibrage, ledit piston venant serrer axialement dans une position embrayée un ensemble multidisques contre des moyens de réaction, ledit ensemble multidisques comportant au moins des disques de friction liés en rotation à un porte-disques extérieur et des flasques qui sont liés en rotation par au moins un porte-disques intérieur à l'un desdits premier et deuxième arbres menés.

On connaît de l'art antérieur de tels systèmes de transmission comportant un mécanisme à double embrayage.

On y distingue notamment deux conceptions de mécanisme à double embrayage, d'une part les mécanismes à double embrayage dits « à sec » et, d'autre part, les mécanismes à double embrayage dits « humide ».

La présente invention concerne plus particulièrement un double embrayage humide (ou « *Double Wet Clutch* » en anglais).

Dans le cas d'un mécanisme à double embrayage humide, les embrayages sont généralement de type multidisques et les garnitures de friction des disques sont maintenues en permanence humides par de l'huile.

Un mécanisme à double embrayage, tel que décrit par exemple dans DE 10 2011 102 748 A1, comporte un premier embrayage qui, agencé par exemple côté boîte de vitesses, sert à la fois au démarrage et à l'engagement des rapports impairs et un deuxième embrayage qui, agencé par exemple côté moteur, prend en charge les rapports pairs et la marche arrière.

Le premier embrayage et le deuxième embrayage transmettent alternativement la puissance d'entrée (le couple et la vitesse) de l'arbre menant, qui est lié en rotation au moteur, à l'un des deux arbres menés qui sont liés à la boîte de vitesses et généralement coaxiaux.

Pour une sécurité améliorée, le premier embrayage et le deuxième embrayage du mécanisme sont respectivement débrayés au repos, c'est à dire « normalement ouvert », et sont fermés activement par des moyens d'actionnement hydraulique d'un dispositif de commande qui est associé au mécanisme à double embrayage.

L'intérêt croissant porté aux mécanismes à double embrayage est notamment lié au confort et aux performances obtenues, ainsi qu'à la continuité de l'accélération lors des changements de rapport, sans rupture de couple.

Les systèmes de transmission comportant un tel mécanisme à double embrayage apportent aussi, par comparaison notamment avec une boîte de vitesse automatique traditionnelle, un gain de consommation et des émissions de CO₂.

Les systèmes de transmission comportant un mécanisme à double embrayage humide connus ne donnent cependant pas entière satisfaction, notamment pour certaines applications.

Dans certaines applications, notamment mais non exclusivement pour des véhicules industriels de type « truck » (camions, utilitaires, etc.), la transmission de manière fiable de couples importants est recherchée tout en ayant une compacité radiale du système de transmission, afin par exemple d'en permettre l'implantation entre le moteur et la boite de vitesses du véhicule.

Le couple moteur à transmettre par les systèmes de transmission est en constante augmentation depuis plusieurs années, jusqu'à atteindre des valeurs de l'ordre de 4000 Nm. Les architectures connues de systèmes de transmission comportant un mécanisme à double embrayage humide ne permettent pas de transmettre ces valeurs de couple et n'offrent pas une fiabilité satisfaisante.

Le but de la présente invention est notamment de proposer un système de transmission comportant un mécanisme à double embrayage humide permettant de résoudre au moins une partie de certains inconvénients de l'art antérieur.

Dans ce but, l'invention propose un système de transmission du type décrit précédemment, caractérisé en ce que ledit mécanisme à double embrayage humide comporte des moyens de liaison agencés axialement entre les pistons du premier embrayage et du deuxième embrayage qui, pour transmettre directement la puissance d'entrée, lient ensemble axialement sans jeu au moins ledit voile d'entraînement, le porte-disques intérieur du premier embrayage, le porte-disques intérieur du deuxième embrayage et lesdits moyens de réaction interposés axialement entre lesdits porte-disques intérieurs.

Autrement dit, l'invention propose un système de transmission, notamment pour un véhicule automobile, comportant autour d'un axe au moins :
- une coquille d'entrée qui est liée en rotation à un arbre menant et à un voile d'entrainement pour lier en rotation ladite coquille d'entrée à un mécanisme à double embrayage humide qui est commandé pour accoupler sélectivement ledit arbre menant à un premier arbre mené et à un deuxième arbre mené,
ledit mécanisme à double embrayage humide comportant au moins un premier embrayage et un deuxième embrayage respectivement de type multidisques, chacun desdits premier et deuxième embrayages comportant au moins un piston mobile axialement qui est commandé en déplacement au moyen d'une chambre de commande à laquelle est associée une chambre d'équilibrage délimitée au moins par un piston d'équilibrage, ledit piston venant serrer axialement dans une position embrayée un ensemble multidisques contre des moyens de réaction, ledit ensemble multidisques comportant au moins des disques de friction liés en rotation à un porte-disques extérieur et des flasques qui sont liés en rotation par au moins un porte-disques intérieur à l'un desdits premier et deuxième arbres menés,
caractérisé en ce que le voile d'entraînement, le porte-disques intérieur du premier embrayage, le porte-disques intérieur du deuxième embrayage et lesdits moyens de réaction interposés axialement entre lesdits porte-disques intérieur sont des pièces distinctes et en ce que ledit mécanisme à double embrayage humide comporte des moyens de liaison agencés axialement entre les pistons du premier embrayage et du deuxième embrayage qui, pour transmettre directement la puissance d'entrée, lient ensemble axialement sans jeu au moins les pièces distinctes.

Grâce aux moyens de liaison, la puissance d'entrée est transmise directement au premier embrayage et au deuxième embrayage du mécanisme à double embrayage humide.

Avantageusement, la transmission directe de la puissance au milieu des deux embrayages par des moyens de liaison communs peut permettre d'assurer une fiabilité égale pour les deux embrayages. La mise en commun des moyens de liaison pour les deux embrayages permet d'augmenter la capacité de transmission du couple moteur.

Selon d'autres caractéristiques de l'invention :
- lesdits moyens de liaison lient également axialement sans jeu le piston d'équilibrage du premier embrayage ;
- lesdits moyens de liaison lient également axialement sans jeu le piston d'équilibrage du deuxième embrayage ;
- lesdits moyens de liaison sont réalisés par rivetage ;
- lesdits moyens de liaison comportent au moins une série de premiers rivets associés au premier embrayage et une série de deuxièmes rivets associés au deuxième embrayage ;
- lesdits premiers rivets lient axialement sans jeu au moins ledit voile d'entraînement, le porte-disque intérieur du premier embrayage et lesdits moyens de réaction ;
- lesdits premiers rivets lient également axialement sans jeu le piston d'équilibrage du premier embrayage ;
- lesdits deuxièmes rivets lient axialement sans jeu au moins le porte-disque intérieur du deuxième embrayage et lesdits moyens de réaction ;
- lesdits deuxièmes rivets lient également axialement sans jeu le piston d'équilibrage du deuxième embrayage ;
- des passages d'huile sont ménagés pour permettre une circulation d'huile, radialement vers l'extérieur, au niveau des moyens de liaison ;
- le piston d'équilibrage du premier embrayage et le piston d'équilibrage du deuxième embrayage comportent des emboutis délimitant, entre deux emboutis circonférentiellement consécutifs, lesdits passages radiaux d'huile ;
- lesdits passages radiaux d'huile sont constitués par des fenêtres obtenues par découpe, entre des pattes de fixation circonférentiellement consécutives, du porte-disques intérieur ;
- le voile d'entraînement comporte des ouvertures pour le passage axial d'une partie d'actionnement du piston du premier embrayage ;
- le voile d'entraînement constitue le piston d'équilibrage du premier embrayage ;
- le premier embrayage et le deuxième embrayage dudit mécanisme à double embrayage humide sont axialement juxtaposés, le premier embrayage et le deuxième embrayage étant agencés axialement de part et d'autre desdits moyens de réaction ;
- le piston du premier embrayage et le piston du deuxième embrayage dudit mécanisme à double embrayage humide se déplacent axialement en sens opposé pour venir serrer lesdits disques de friction associés en position embrayée ;
- lesdits moyens de liaison sont réalisés par soudage, notamment un soudage laser par transparence ;
- le premier embrayage et le deuxième embrayage comportent des moyens élastiques de rappel pour rappeler automatiquement le piston en position débrayée ;
- les moyens élastiques de rappel du piston sont interposés axialement entre au moins une partie des disques de friction et des flasques de l'embrayage.
- les moyens de rappel du piston d'un embrayage sont formés par au moins un ressort qui est agencé radialement entre l'axe O et le porte-disques intérieur pour rappeler automatiquement le piston vers la position débrayée.
- lesdits moyens de liaison sont implantés radialement entre l'axe O et l'ensemble multidisques.

Avantageusement, l'implantation radiale des moyens de liaison entre l'axe O et l'ensemble multidisques procure au système de transmission une compacité radiale.

D'autres caractéristiques et avantages de l'invention apparaîtront au cours de la lecture de la description détaillée qui va suivre pour la compréhension de laquelle on se reportera aux dessins annexés parmi lesquels :

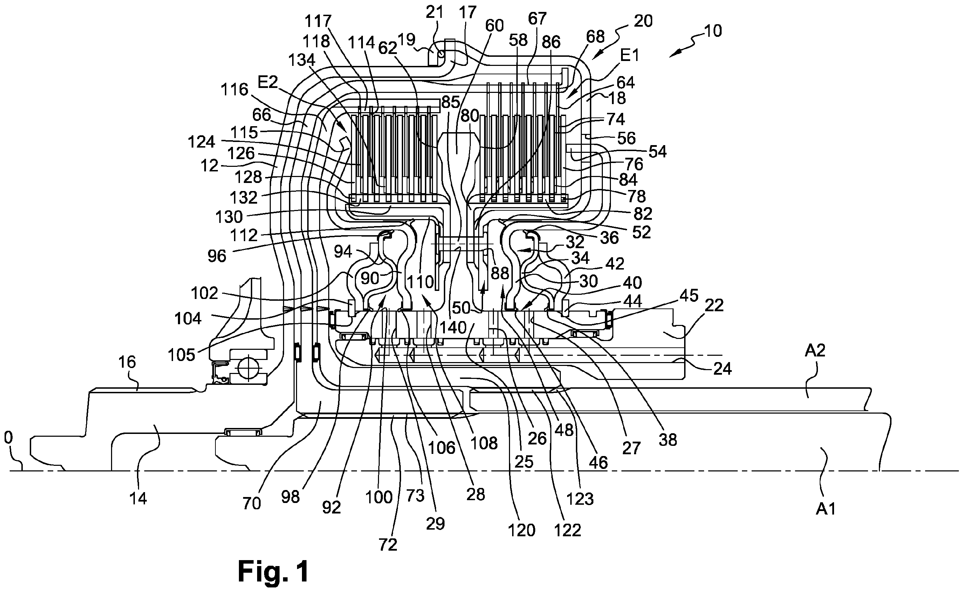

- la figure 1 est une demi-vue en coupe axiale qui représente un système de transmission comportant un mécanisme à double embrayage humide et qui illustre un premier mode de réalisation de l'invention dans lequel les moyens de liaison sont réalisés par rivetage, au moyen de rivets liant axialement sans jeu l'ensemble des pièces ;

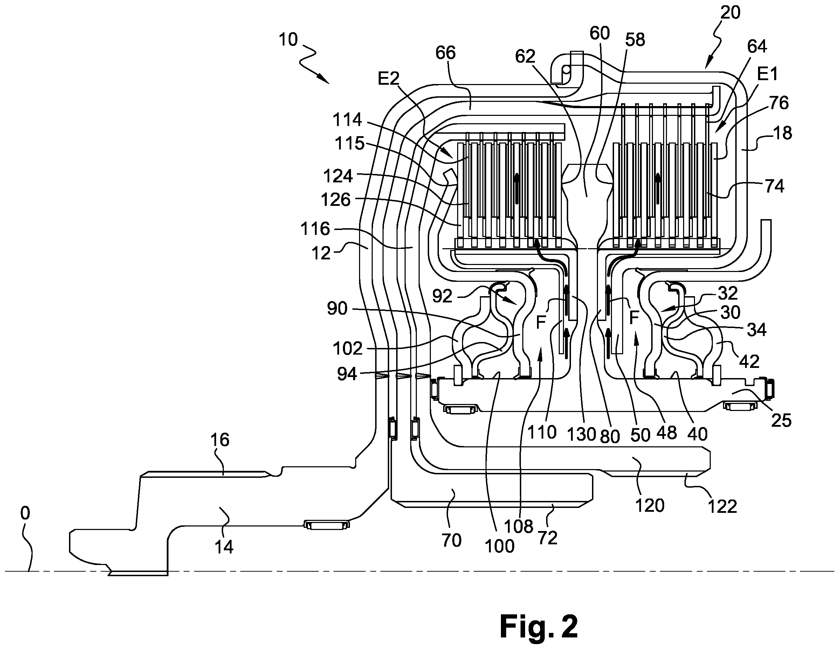

- la figure 2 est une demi-vue en coupe axiale qui, décalée angulairement par rapport à celle de la figure 1, représente le système de transmission selon le premier mode de réalisation et qui illustre notamment l'un des passages radiaux de circulation d'huile existant entre deux emboutis consécutifs associés aux rivets, d'une part sur le voile d'entraînement formant le piston d'équilibrage du premier embrayage et, d'autre part, sur le piston d'équilibrage du deuxième embrayage ;

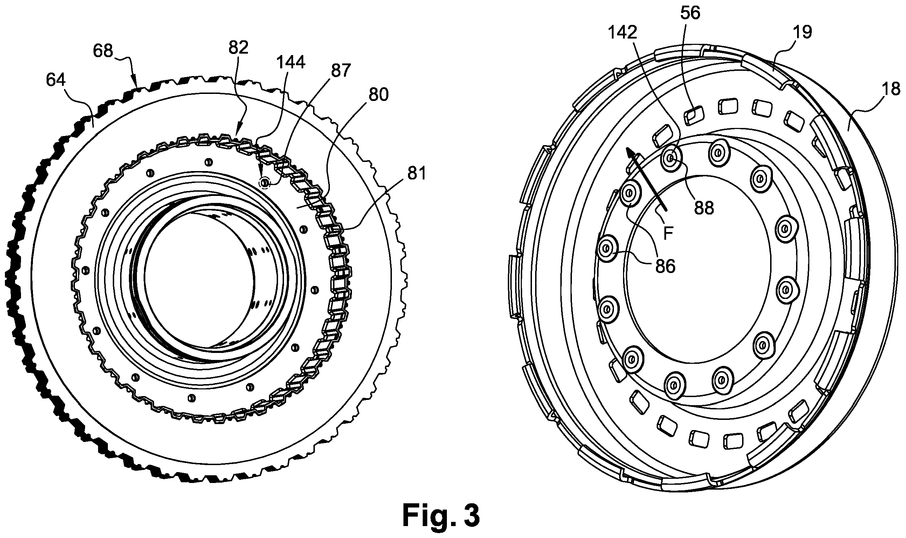

- la figure 3 est une vue en perspective qui représente respectivement le porte-disques intérieur du premier embrayage et le piston d'équilibrage du premier embrayage formé par le voile d'entraînement et qui illustre les passages radiaux de circulation d'huile existant entre la face radiale dudit porte-disques et la face radiale du piston d'équilibrage, dans les zones non embouties de la face ;

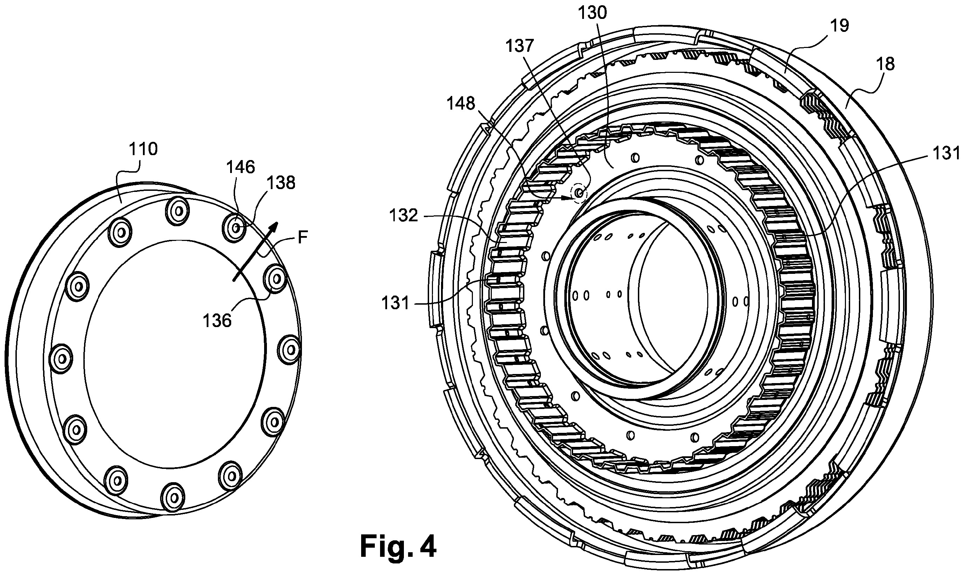

- la figure 4 est une vue en perspective qui représente respectivement le porte-disques intérieur du deuxième embrayage et le piston d'équilibrage du deuxième embrayage et qui illustre, comme la figure 3, les passages radiaux de circulation d'huile existant entre la face radiale dudit porte-disques et la face radiale du piston d'équilibrage formé par le voile, dans les zones non embouties de sa face ;

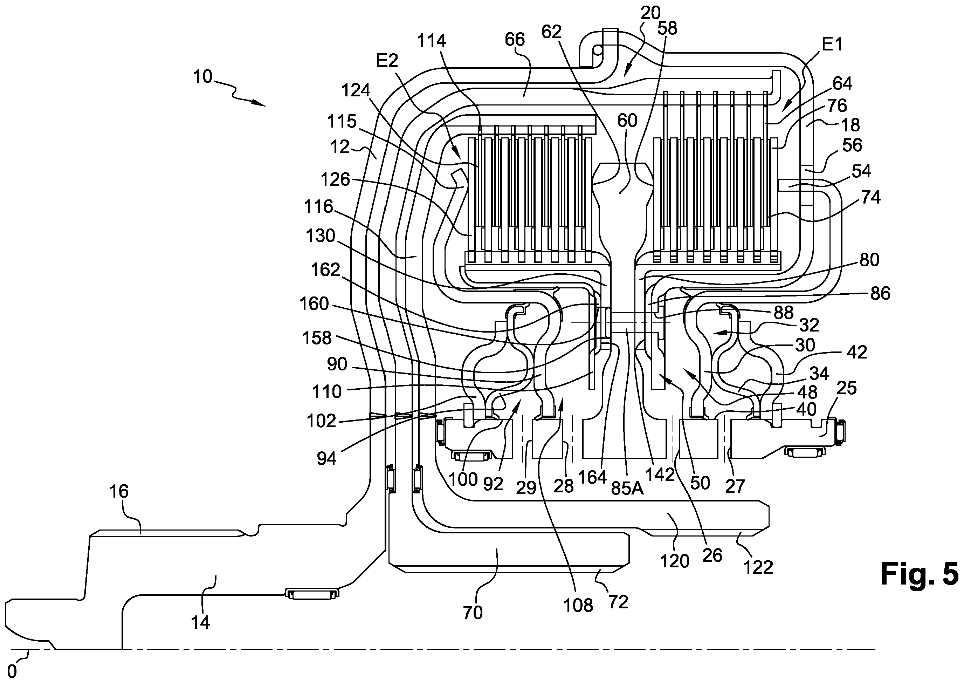

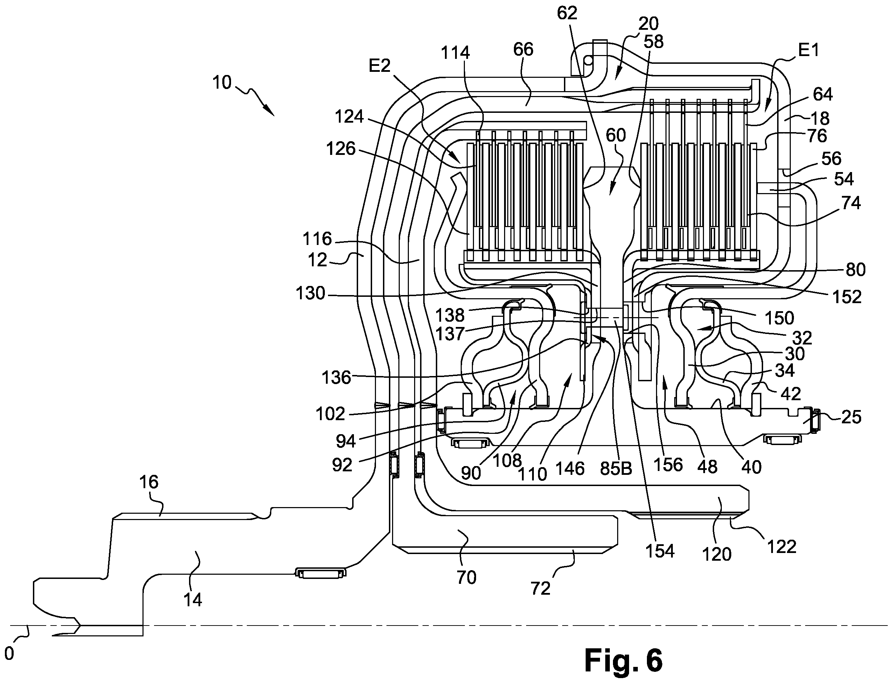

- les figures 5 et 6 sont des demi-vues en coupe axiale qui, respectivement analogue à la figure 1, représentent un système de transmission comportant un mécanisme à double embrayage humide selon un deuxième mode de réalisation et qui illustrent des moyens de liaison réalisés par rivetage comportant au moins une série de premiers rivets pour lier axialement sans jeu des pièces du premier embrayage et une autre série de deuxièmes rivets pour lier axialement sans jeu des pièces du deuxième embrayage dudit mécanisme ;

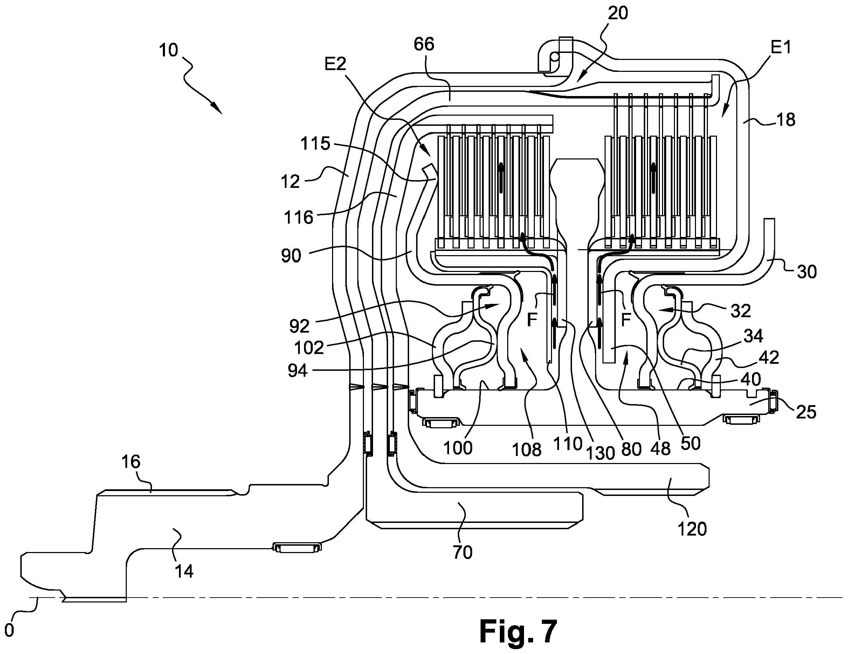

- la figure 7 est une demi-vue en coupe axiale qui représente le système de transmission selon le deuxième mode de réalisation et qui, décalée angulairement par rapport à celle des figures 5 et 6, illustre pour chaque embrayage l'un des passages radiaux de circulation d'huile, respectivement entre le porte-disques intérieur et le piston d'équilibrage formé par la partie radiale interne du voile d'entraînement pour le premier embrayage et entre le porte-disques intérieur et le piston d'équilibrage pour le deuxième embrayage ;

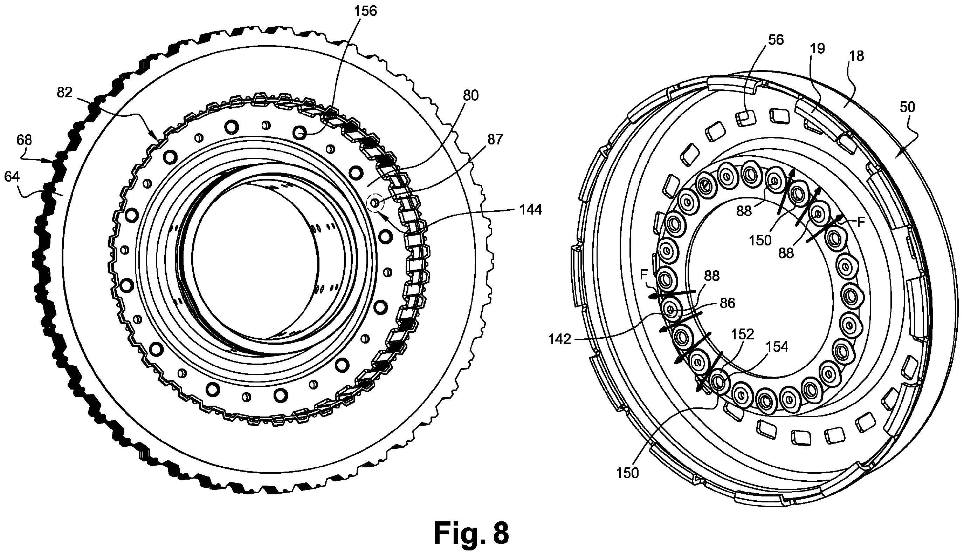

- la figure 8 est une vue en perspective qui, analogue à la figure 4, représente respectivement le porte-disques intérieur du premier embrayage et le piston d'équilibrage du premier embrayage formé par la partie radiale interne du voile d'entraînement et qui illustre les passages radiaux de circulation d'huile existant entre la face dudit porte-disques et la face radiale du piston d'équilibrage formé par le voile, dans les zones non embouties de ladite face ;

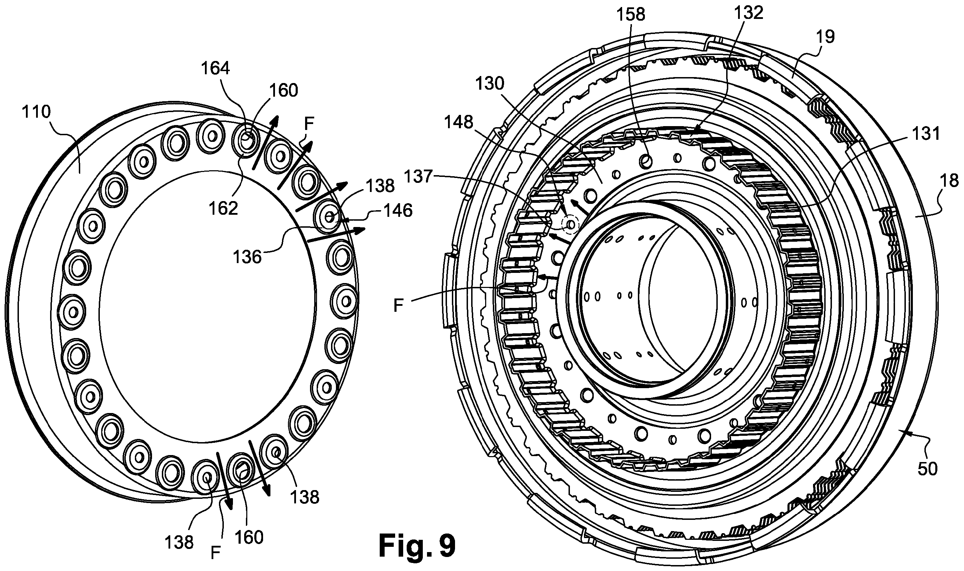

- la figure 9 est une vue en perspective qui représente respectivement le porte-disques intérieur du deuxième embrayage et le piston d'équilibrage du deuxième embrayage et qui illustre, comme la figure 8, les passages radiaux de circulation d'huile existant entre la face du porte-disques et la face radiale du piston d'équilibrage, dans les zones non embouties de ladite face ;

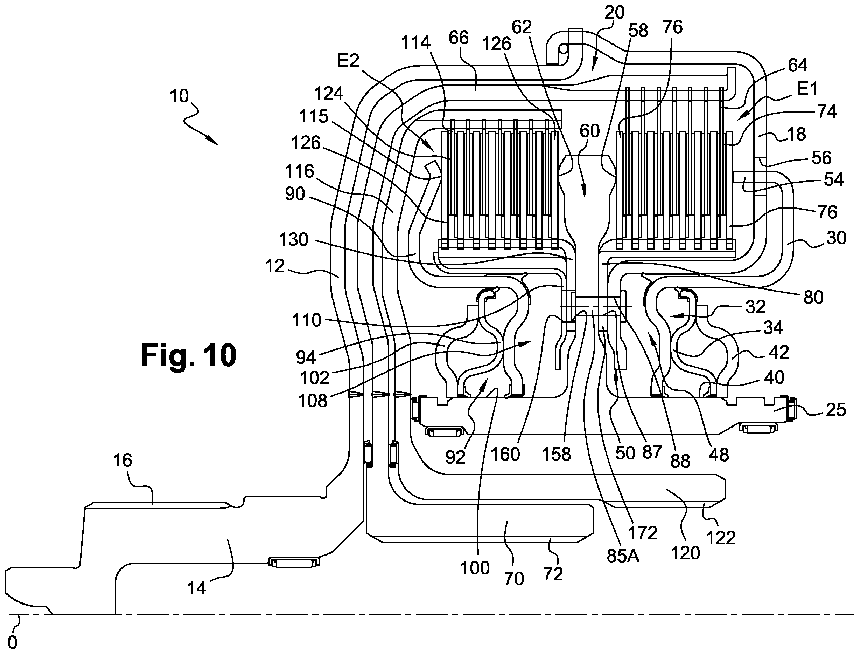

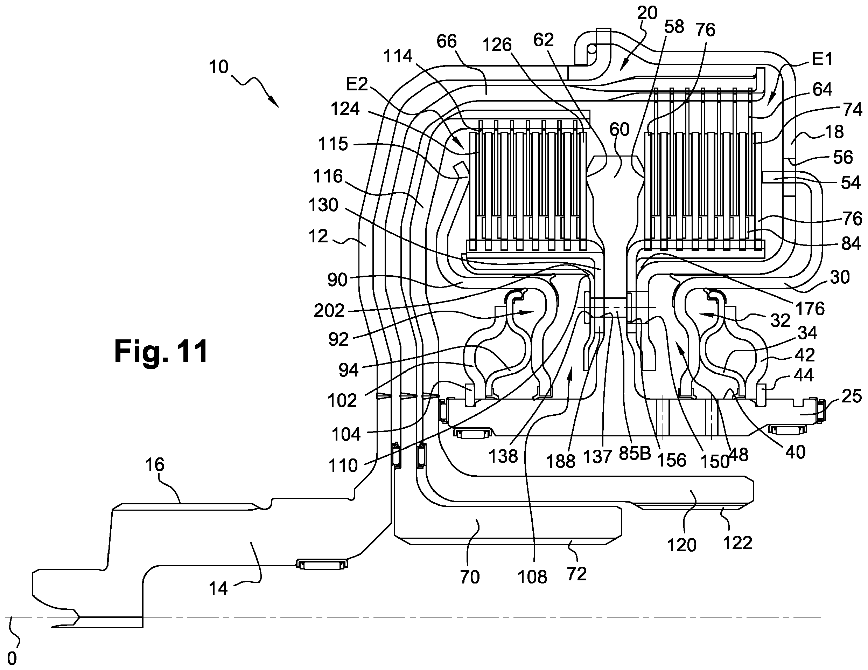

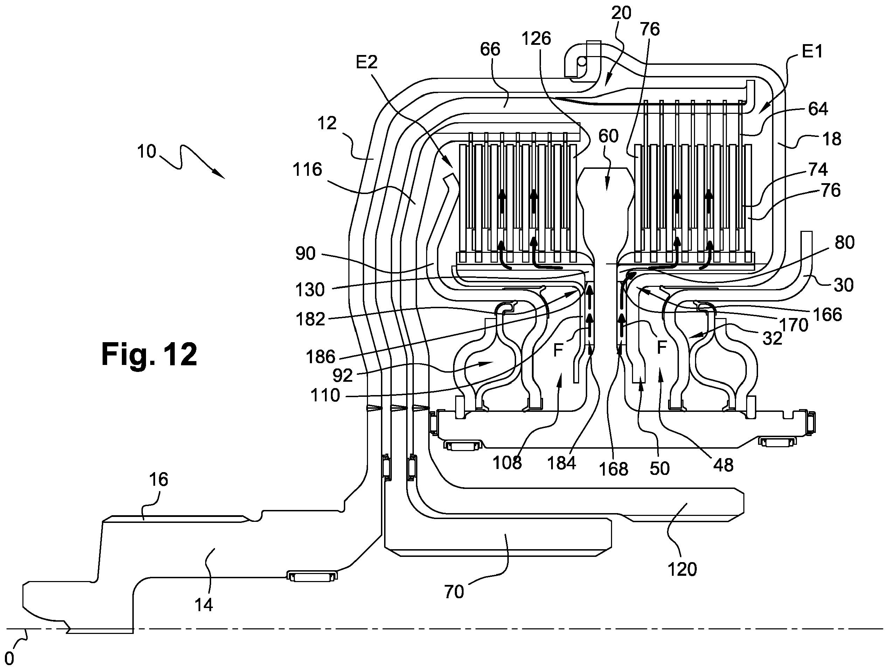

- les figures 10 à 12 sont des demie-vues en coupe axiale qui, analogues aux figures 5 à 7, représentent un système de transmission selon un troisième mode de réalisation et qui illustrent, plus particulièrement sur la figure 12, des passages radiaux d'huile formés par découpe du porte-disques intérieur de chaque embrayage du mécanisme ;

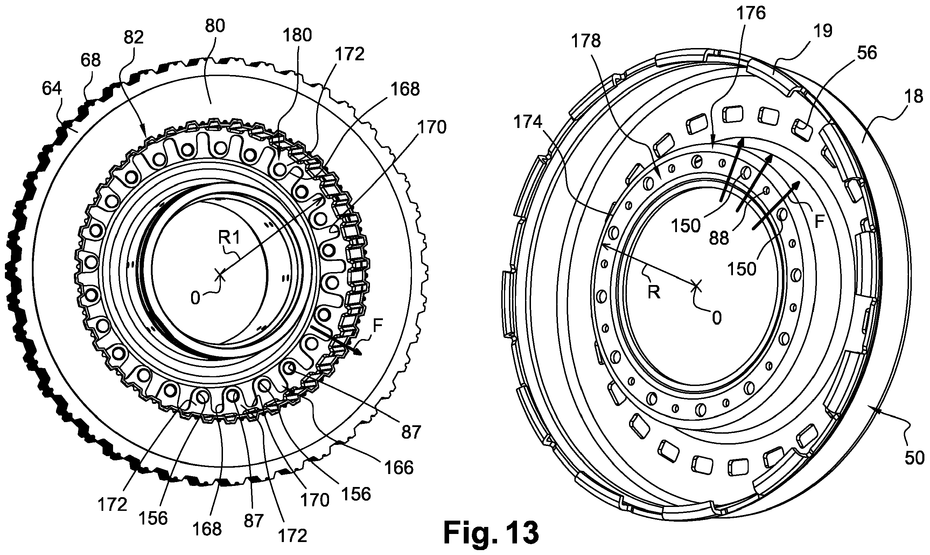

- la figure 13 est une vue en perspective qui, analogue à la figure 8, représente le porte-disques intérieur du premier embrayage comportant entre deux pattes de fixation circonférentiellement consécutives une découpe pour former, après liaison avec le piston d'équilibrage du premier embrayage formé par la partie radiale interne du voile d'entraînement, des fenêtres constituant lesdits passages de circulation d'huile et qui illustre un exemple de la forme desdites découpes réalisées dans le porte-disques intérieur ;

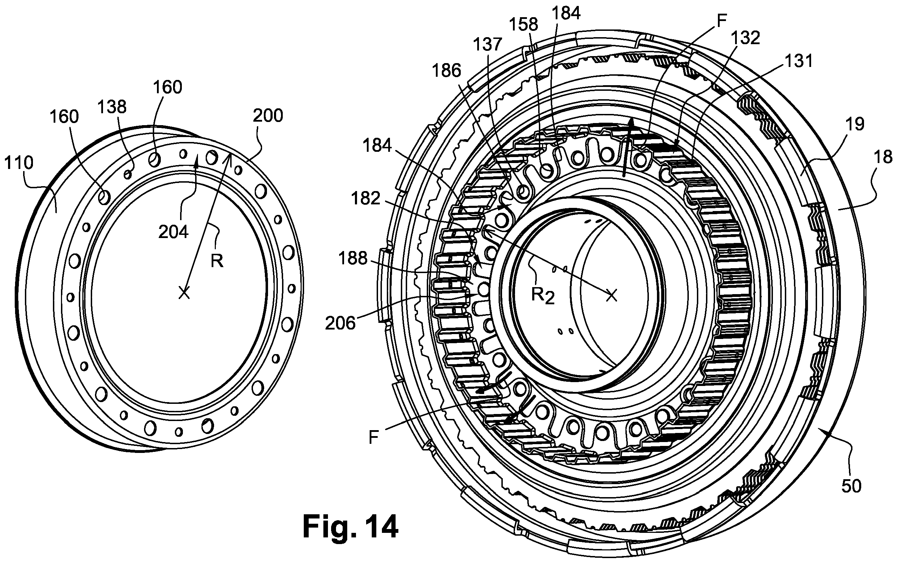

- la figure 14 est une vue en perspective qui, analogue à la figure 9, représente le porte-disques intérieur du deuxième embrayage et le piston d'équilibrage du deuxième embrayage et qui illustre, pour le deuxième embrayage, lesdites découpes dans le porte-disques intérieur pour la formation - après la liaison par rivetage avec le piston d'équilibrage - des fenêtres constituant lesdits passages radiaux de circulation d'huile entre le porte-disques et le piston d'équilibrage.

Dans la suite de la description et les revendications, on utilisera à titre non limitatif et afin d'en faciliter la compréhension, les termes « avant » ou « arrière » selon la direction par rapport à une orientation axiale déterminée par l'axe O principal de rotation du système de transmission et les termes « intérieur / interne » ou « extérieur / externe » par rapport à l'axe O et suivant une orientation radiale, orthogonale à ladite orientation axiale.

On a représenté sur les figures 1 à 4 un premier mode de réalisation d'un système 10 de transmission, notamment pour un véhicule automobile, présentant un axe O principal de rotation.

Le système 10 de transmission comporte autour de l'axe O au moins un élément d'entrée qui est lié en rotation à un arbre menant (non représenté).

De préférence, l'élément d'entrée du système 10 comporte au moins une coquille 12 d'entrée qui est liée en rotation à un moyeu 14 d'entrée.

La coquille 12 d'entrée, présentant globalement une forme en « L », comporte une partie d'orientation radiale et une partie d'orientation axiale.

Le moyeu 14 comporte une partie d'orientation radiale et une partie d'orientation axiale, le moyeu 14 étant agencé radialement à l'intérieur par rapport à la coquille 12.

La partie d'orientation axiale du moyeu 14 s'étend à l'intérieur de la partie radiale, axialement vers l'arrière, dans une direction correspondant à celle du moteur.

Le moyeu 14 comporte des cannelures 16, ménagées dans une surface cylindrique externe de la partie axiale, pour la liaison en rotation de l'élément d'entrée formé par au moins la coquille 12 et le moyeu 14 avec l'arbre menant.

L'extrémité intérieure de la partie radiale de la coquille 12 et celle extérieure de la partie radiale du moyeu 14 d'entrée sont solidaires, de préférence fixées ensemble par soudage.

En variante, l'extrémité intérieure de la partie radiale de la coquille 12 d'entrée et l'extrémité extérieure de la partie radiale du moyeu 14 d'entrée sont fixées ensemble par rivetage.

Le moyeu 14 d'entrée est par exemple lié en rotation par l'intermédiaire des cannelures 16 à la sortie d'un dispositif d'amortissement ou amortisseur (tel qu'un double volant amortisseur, etc.) dont l'entrée est liée, par l'intermédiaire notamment d'un volant moteur, à l'arbre menant formé par un vilebrequin qu'entraîne en rotation un moteur équipant le véhicule automobile.

La coquille 12 d'entrée est entraînée en rotation par le moteur par l'intermédiaire du moyeu 14 d'entrée.

La coquille 12 d'entrée est liée en rotation à un voile 18 d'entrainement, lequel voile 18 d'entraînement lie en rotation ladite coquille 12 d'entrée à un mécanisme 20 à double embrayage humide.

La coquille 12 d'entrée et le voile 18 d'entraînement sont liés en rotation par coopération de formes.

La coquille 12 d'entrée comporte, à son extrémité radiale externe d'orientation axiale, des pattes 17 qui s'étendent radialement vers l'extérieur et qui s'interpénètrent avec des pattes 19 que comporte, à son extrémité radiale externe d'orientation axiale, le voile 18 d'entraînement.

Les pattes 19 du voile 18 d'entraînement s'étendent radialement vers l'intérieur et sont décalées angulairement par rapport aux pattes 17 pour, circonférentiellement, s'insérer axialement entre deux pattes 17 consécutives de la coquille 12 d'entrée.

Un jonc 21 annulaire est logé axialement entre les pattes 17 de la coquille 12 d'entrée et les pattes 19 du voile 18 d'entraînement.

Le mécanisme 20 à double embrayage humide est commandé pour accoupler sélectivement ledit arbre menant à un premier arbre A1 mené et à un deuxième A2 arbre mené.

De préférence, le premier arbre A1 mené et le deuxième A2 arbre mené sont coaxiaux.

Le mécanisme 20 à double embrayage humide comporte au moins un premier embrayage E1 et un deuxième embrayage E2, qui sont respectivement de type multidisques.

Le premier arbre A1 mené est entraîné en rotation lorsque ledit premier embrayage E1 est fermé et le deuxième A2 arbre mené est entraîné en rotation lorsque ledit deuxième embrayage E2 est fermé, lesdits premier et deuxième arbres A1, A2 menés étant respectivement reliés à une boîte de vitesses équipant le véhicule automobile.

Dans le mécanisme 20 à double embrayage humide, le premier embrayage E1 sert par exemple à la fois au démarrage et à l'engagement des rapports impairs et le deuxième embrayage E2 prend alors en charge les rapports pairs et la marche arrière, en variante les rapports pris en charge par lesdits premier embrayage E1 et deuxième embrayage E2 sont inversés.

Le premier embrayage E1 est par exemple agencé axialement à l'avant du côté de la boîte de vitesses et le deuxième embrayage E2 est par exemple agencé axialement à l'arrière du côté moteur, du moyeu 14 d'entrée.

Le premier embrayage E1 et le deuxième embrayage E2 transmettent alternativement la puissance d'entrée (le couple et la vitesse) de l'arbre menant, que reçoit la coquille 12 d'entrée du système 10, à l'un des deux arbres A1, A2 menés, en fonction de l'état ouvert ou fermé de chacun des embrayages E1 et E2.

De préférence, le premier embrayage E1 et le deuxième embrayage E2 sont à l'état ouvert, encore dit « normalement ouvert », et sont actionnés sélectivement en fonctionnement par un dispositif de commande (non représenté) pour passer de l'état ouvert à l'état fermé.

Le mécanisme 20 à double embrayage humide est commandé hydrauliquement par l'intermédiaire d'un fluide sous pression, généralement de l'huile.

Pour commander sélectivement le changement d'état du premier embrayage E1 et du deuxième embrayage E2 du mécanisme 20 du système 10 de transmission, le dispositif de commande comporte au moins un arbre 22 de commande comportant des canaux 24 d'alimentation en huile, par exemple au nombre de quatre tel que représenté sur la figure 1.

Le mécanisme 20 comporte au moins un moyeu 25 comportant quatre perçages 26, 27, 28, 29 radiaux qui sont chacun reliés à l'un des canaux 24 d'alimentation en huile, les deux perçages 26 et 27 sont associés à la commande du premier embrayage E1 situé axialement à l'avant et les deux autres perçages 28 et 29 sont associés à la commande du deuxième embrayage E2 situé axialement à l'arrière.

Le premier embrayage E1 de type multidisques comporte un piston 30 qui est mobile axialement, ici de l'avant vers l'arrière, entre une position débrayée et une position embrayée qui correspondent respectivement aux états ouvert et fermé du premier embrayage E1.

Le piston 30 est commandé en déplacement au moyen d'une chambre 32 de commande délimitée axialement par une face avant d'une partie radiale interne du piston 30 et par la face radiale arrière d'une pièce 34 de fermeture.

La pièce 34 de fermeture porte à son extrémité radiale externe des moyens 36 d'étanchéité qui coopèrent avec une face interne d'une partie axiale du piston 30 et à son extrémité radiale interne des moyens 38 d'étanchéité qui coopèrent avec une surface 40 axiale externe du moyeu 25.

De préférence, la pièce 34 de fermeture est associée à une pièce 42 d'appui qui est bloquée axialement par un anneau 44 d'arrêt monté dans une gorge 45 du moyeu 25.

Avantageusement, les efforts axiaux liés à la mise en pression de la chambre 32 de commande sont repris par la pièce 42 d'appui et non par la pièce 34 de fermeture pourtant les moyens 36 et 38 d'étanchéité.

Le piston 30 comporte à son extrémité radiale interne des moyens 46 d'étanchéité qui coopèrent avec la surface 40 axiale externe du moyeu 25, lorsque le piston 30 est déplacé axialement entre les positions débrayée et embrayée par la mise en pression de la chambre 32 de commande.

La pièce 34 de fermeture de la chambre 32 de commande du piston 30 comporte, entre ses deux extrémités radiales portant les moyens d'étanchéité 36 et 38, une portion convexe qui coopère avec la face radiale avant du piston 30 axialement en vis-à-vis.

Le volume de la chambre 32 de commande comporte une partie extérieure et une partie intérieure, située radialement de part et d'autre de ladite portion convexe de la pièce 34 de fermeture.

La chambre 32 de commande est alimentée en huile par l'intermédiaire du perçage 27 qui traverse radialement le moyeu 25, le perçage 27 mettant en communication ladite chambre 32 de commande avec l'un des canaux 24 d'alimentation en huile.

La chambre 32 de commande du piston 30 du premier embrayage E1 est associée à une chambre 48 d'équilibrage délimitée au moins par un piston 50 d'équilibrage.

Avantageusement, le voile 18 d'entraînement constitue le piston 50 d'équilibrage du premier embrayage E1.

Le voile 18 d'entraînement assure donc une double fonction, de transmission de la puissance d'entrée d'une part, et de piston d'équilibrage dans le fonctionnement du premier embrayage E1, d'autre part.

Plus précisément, la fonction du piston 50 d'équilibrage du premier embrayage E1 est assurée principalement par la partie radiale interne dudit voile 18.

En variante, le piston 50 d'équilibrage et le voile 18 d'entraînement sont réalisés sous la forme de deux pièces distinctes.

La chambre 48 d'équilibrage du premier embrayage E1 est délimitée axialement par la face radiale avant du piston 50 d'équilibrage formé par la partie radialement interne du voile 18 d'entraînement et par la face radiale arrière du piston 30.

La chambre 48 d'équilibrage est alimentée en huile par l'intermédiaire du perçage 26 que comporte le moyeu 25.

L'étanchéité de la chambre 48 d'équilibrage est assurée radialement à l'extérieur par des moyens 52 d'étanchéité qui sont portés par le piston 30 et qui coopèrent avec la face interne d'une partie axiale du piston 50 d'équilibrage formé par le voile 18 d'entraînement.

Le piston 30 du premier embrayage E1 s'étend radialement et il est disposé axialement entre la chambre 32 de commande, située axialement à l'avant, et la chambre 48 d'équilibrage, située axialement à l'arrière.

Le piston 30 du premier embrayage E1 comporte, à son extrémité radiale extérieure, une partie d'actionnement formée par des doigts 54 qui s'étendent axialement vers l'arrière pour agir sur un ensemble multidisques du premier embrayage E1.

Avantageusement, le voile 18 d'entraînement comporte des ouvertures 56 pour le passage axial desdits doigts 54 formant la partie d'actionnement du piston 30 de l'embrayage E1.

Le piston 30 est commandé pour venir serrer axialement, en position embrayée, ledit ensemble multidisques du premier embrayage E1 contre une face 58 de réaction des moyens 60 de réaction.

Les moyens 60 de réaction sont liés en rotation au moyeu 25. De préférence, les moyens 60 de réaction et le moyeu 25 sont réalisés en une seule pièce, en variante en deux pièces fixées ensemble par tous moyens tels que par rivetage ou soudage.

Les moyens 60 de réaction forment un disque qui s'étend radialement vers l'extérieur depuis le moyeu 25 et qui, avantageusement commun au premier embrayage E1 et au deuxième embrayage E2, s'étendent axialement entre lesdits embrayages E1 et E2.

Les moyens 60 de réaction comporte une face 62 de réaction pour le deuxième embrayage E2 qui, axialement opposée à la face 58 de réaction avant du premier embrayage E1, est orientée vers l'arrière.

Le premier embrayage E1 et le deuxième embrayage E2 dudit mécanisme 20 à double embrayage humide sont actionnés axialement en sens opposé, soit axialement de l'avant vers l'arrière contre la face 58 pour le piston 30 du premier embrayage E1 et axialement de l'arrière vers l'avant contre la face 62 pour celui du deuxième embrayage E2.

Dans le système 10 de transmission représenté aux figures 1 à 4, le premier embrayage E1 et le deuxième embrayage E2 dudit mécanisme 20 à double embrayage humide sont axialement juxtaposés, le premier embrayage E1 et le deuxième embrayage E2 étant agencés axialement de part et d'autre desdits moyens 60 de réaction.

L'ensemble multidisques du premier embrayage E1 comporte au moins des disques 64 de friction qui sont liés en rotation audit premier arbre A1 mené par un porte-disques 66 extérieur. Le porte-disques 66 extérieur forme l'élément de sortie du premier embrayage E1.

Le porte-disques 66 extérieur comporte à la périphérie radiale extérieure une partie axiale qui est munie d'une denture 67 destinée à coopérer avec une denture 68 complémentaire que comporte chaque disque 64 de friction à sa périphérie radiale extérieure.

Le porte-disques 66 extérieur comporte des trous radiaux répartis circonférentiellement dans ladite partie axiale munie de la denture 67 et destinés à être traversés par l'huile introduite dans l'ensemble multidisques du premier embrayage E1.

Le porte-disques 66 extérieur est lié en rotation par engrènement avec les disques 64 de friction et par une liaison cannelée avec ledit premier arbre A1 mené.

Le porte-disques 66 extérieur comporte un moyeu 70 de sortie qui s'étend axialement et comporte radialement à l'intérieur des cannelures 72 axiales qui engrènent avec des cannelures 73 complémentaires du premier arbre A1 mené.

Le porte-disques 66 extérieur présente globalement une forme en « L » dont l'extrémité radiale intérieure, à l'opposé de la denture 67, est solidaire du moyeu 70 de sortie.

De préférence, le porte-disques 66 extérieur et le moyeu 70 de sortie sont fixés ensemble par soudage, en variante par rivetage.

Les disques 64 de friction comportent chacun sur leurs faces radiales axialement opposées, respectivement avant et arrière, une garniture 74 de friction.

L'ensemble multidisques du premier embrayage E1 comporte des flasques 76 qui sont munis à leur périphérie radiale interne d'une denture 78 pour les lier en rotation avec un porte-disques 80 intérieur.

Le porte-disques 80 intérieur comporte à son extrémité radiale externe une partie axiale comportant une denture 82 externe qui, complémentaire, engrène avec la denture 78 interne de chacun des flasques 76 pour les lier en rotation sans jeu.

Tel qu'illustré sur la figure 3, le porte-disques 80 intérieur comporte des trous 81 radiaux répartis circonférentiellement dans ladite partie axiale munie de la denture 82 et destinés à être traversés par l'huile introduite dans l'ensemble multidisques du premier embrayage E1.

Les disques 64 de friction sont, unitairement, axialement interposés entre deux flasques 76 successifs. Chacune des garnitures 74 de friction d'un des disques 64 de friction coopère en position embrayée avec l'une des faces radiale des flasques 76 agencés axialement de part et d'autre, en avant et en arrière, dudit disque 64 de friction.

L'ensemble multidisques du premier embrayage E1 comporte axialement un flasque 76 à chacune de ses extrémités, respectivement un flasque 76 avant dont la face radiale avant est destinée à coopérer en position embrayée avec les doigts 54 formant la partie d'actionnement du piston 30 et un flasque 76 arrière dont la face radiale arrière est destinée à coopérer avec la face 58 avant des moyens 60 de réaction.

Le premier embrayage E1 comporte des moyens 84 élastiques de rappel pour rappeler automatiquement le piston 30 en position débrayée, correspondant à un état ouvert de l'embrayage.

De préférence, les moyens 84 élastiques de rappel du piston 30 sont formés par des rondelles élastiques, telles que des rondelles ondulées de type « Onduflex™».

Les rondelles 84 élastiques sont interposées axialement entre les flasques 76 et agencées radialement à l'intérieur des disques 64 de friction, en dessous des garnitures 74 de friction. Chaque rondelle 84 élastique est axialement en appui contre la face radiale arrière d'un flasque 76 et contre la face radiale avant d'une autre flasque 76 axialement adjacent.

Les moyens 84 élastiques de rappel sollicitent axialement les flasques 76 et ce faisant facilite la libération des disques 64 de friction et le rappel du piston 30 vers la position débrayée.

En variante non représentée, les moyens 84 de rappel du piston d'un embrayage sont formés par au moins un ressort qui est par exemple agencé radialement entre l'axe O et le porte-disques 80 intérieur pour rappeler automatiquement le piston 30 vers la position débrayée.

Pour transmettre directement la puissance d'entrée, le mécanisme 20 à double embrayage humide comporte des moyens de liaison qui, pour le premier embrayage E1, lient axialement sans jeu au moins le voile 18 d'entraînement, le porte-disques 80 intérieur et les moyens 60 de réaction.

Lorsqu'en variante, le voile 18 d'entraînement et le piston 50 d'équilibrage sont réalisés en deux pièces distinctes, les moyens de liaison lient alors également ledit piston 50 d'équilibrage axialement sans jeu avec le voile 18 d'entraînement, le porte-disques 80 intérieur et les moyens 60 de réaction.

Le piston 50 d'équilibrage du premier embrayage E1 étant formé par le voile 18 d'entraînement, le mécanisme 20 comporte une pièce en moins avec pour avantages notamment un moindre coût, une simplification et une compacité axiale accrue.

Dans ce premier mode de réalisation, les moyens de liaison sont réalisés par rivetage.

En variante non représentée, les moyens de liaison sont réalisés par soudage, notamment par soudage laser par transparence.

Le voile 18 d'entraînement comporte des emboutis 86 qui, répartis circonférentiellement, font saillis axialement vers l'arrière par rapport à la face radiale arrière du voile 18 d'entraînement formant le piston 50 d'équilibrage.

Tel que représenté sur la figure 3, les emboutis 86 entourent chacun un trou 88 destiné à être traversé axialement par l'un des rivets 85 formant lesdits moyens de liaison.

Dans ce premier mode de réalisation, les rivets 85 formant les moyens de liaison sont communs au premier embrayage E1 et au deuxième embrayage E2 qui va maintenant être décrit.

Le deuxième embrayage E2 du mécanisme 20 à double embrayage humide du système 10 de transmission est de conception similaire à celle du premier embrayage E1, le deuxième embrayage E2 étant de type multidisques.

Avantageusement, on se reportera au besoin pour la description du deuxième embrayage E2 à la description détaillée du premier embrayage E1 donnée précédemment.

Le deuxième embrayage E2 comporte un piston 90 qui est mobile axialement, ici de l'arrière vers l'avant, entre une position débrayée et une position embrayée correspondant respectivement aux états ouvert et fermé du deuxième embrayage E2 du mécanisme 20.

Le piston 30 du premier embrayage E1 et le piston 90 du deuxième embrayage E2 dudit mécanisme 20 à double embrayage humide se déplacent axialement en sens opposé pour passer par exemple de la position débrayée à la position embrayée.

Le piston 90 du deuxième embrayage E2 est commandé en déplacement au moyen d'une chambre 92 de commande délimitée axialement par une face arrière d'une partie radiale intérieure du piston 90 et par la face radiale avant d'une pièce 94 de fermeture.

La chambre 92 de commande est alimentée sélectivement en huile par le perçage 28 traversant radialement le moyeu 25 et relié à l'un des canaux 24 d'alimentation de l'arbre 22 de commande.

La pièce 94 de fermeture comporte à son extrémité radiale externe des moyens 96 d'étanchéité qui coopèrent avec une face interne d'une partie axiale du piston 90 et, à son extrémité radiale interne, des moyens 98 d'étanchéité qui coopèrent avec une surface 100 externe du moyeu 25.

La surface 100 associée au deuxième embrayage E2 est située axialement en arrière par rapport aux moyens 60 de réaction agencés entre lesdits embrayages E1 et E2, soit axialement à l'opposé de la surface 40 associée au piston 30 du premier embrayage E1.

De préférence, la pièce 94 de fermeture est associée à une pièce 102 d'appui qui est bloquée axialement par un anneau 104 d'arrêt monté dans une gorge 105 du moyeu 25.

Le piston 90 comporte à son extrémité radiale interne des moyens 106 d'étanchéité qui coopèrent avec la surface 100 externe du moyeu 25, lorsque le piston 90 est déplacé axialement entre les positions débrayée et embrayée par la mise en pression de la chambre 92 de commande.

Comme la pièce 34 de fermeture pour le premier embrayage E1, la pièce 94 de fermeture est conformée, globalement entre ses extrémités radiales portant les moyens 96 et 98 d'étanchéité, pour venir axialement coopérer avec la face radiale arrière du piston 90.

La chambre 92 de commande est associée à une chambre 108 d'équilibrage délimitée par au moins un piston 110 d'équilibrage.

Par comparaison avec le piston 50 d'équilibrage du premier embrayage E1 formé par le voile 18 d'entraînement, le piston 110 d'équilibrage du deuxième embrayage E2 est une pièce distincte.

La chambre 108 d'équilibrage est délimitée axialement par la face radiale arrière du piston 110 d'équilibrage et par la face radiale avant du piston 90.

L'étanchéité de la chambre 108 d'équilibrage est assurée radialement à l'extérieur par de moyens 112 d'étanchéité qui sont portés par le piston 90 et qui coopèrent avec la face interne d'une partie axiale du piston 110 d'équilibrage.

La partie radiale interne du piston 90 s'étend radialement et elle est disposée axialement entre la chambre 92 de commande, située axialement en arrière, et la chambre 108 d'équilibrage, située axialement en avant.

Le piston 90 du deuxième embrayage E2 comporte, à son extrémité radiale extérieure, une partie d'actionnement 115 formée par un bossage qui s'étend axialement vers l'avant en direction d'un ensemble multidisques du deuxième embrayage E2.

La partie d'actionnement 115 du piston 90 du deuxième embrayage E2 est circonférentiellement continue, en variante discontinue.

Avantageusement, la partie d'actionnement formée par les doigts 54 du piston 30 du premier embrayage E1 et la partie d'actionnement 115 du piston 90 du deuxième embrayage E2 dudit mécanisme 20 sont située radialement sur un même rayon centré sur l'axe O du système 10.

Le piston 30 du premier embrayage E1 et le piston 90 du deuxième embrayage E2 appliquent chacun un effort de serrage sur l'ensemble multidisques qui leur est associé selon la direction axiale mais suivant un sens opposé, comme est opposée la réaction sur les faces 58 et 62 des moyens 60 de réaction.

L'ensemble multidisques du deuxième embrayage E2 comporte des disques 114 de friction qui sont liés en rotation au deuxième arbre A2 mené par un porte-disques 116 extérieur formant l'élément de sortie de l'embrayage E2.

Le porte-disques 116 extérieur comporte à la périphérie radiale extérieure une partie axiale qui est munie d'une denture 117 interne destinée à coopérer avec une denture 118 externe que comporte chacun des disques 114 de friction.

Le porte-disques 116 extérieur comporte des trous radiaux répartis circonférentiellement dans ladite partie axiale munie de la denture 117 et destinés à être traversés par l'huile introduite dans l'ensemble multidisques du deuxième embrayage E2.

Le porte-disques 116 extérieur est lié en rotation par engrènement avec les disques 114 de friction et par une liaison cannelée avec ledit deuxième arbre A2 mené.

Le porte-disques 116 extérieur comporte un moyeu 120 de sortie qui s'étend axialement et comporte radialement à l'intérieur des cannelures 122 qui engrènent avec des cannelures 123 complémentaires du deuxième arbre A2 mené.

De préférence, ledit porte-disques 116 et le moyeu 120 de sortie sont fixées ensemble par soudage, en variante par rivetage.

Les disques 114 de friction comportent chacun sur leurs faces radiales axialement opposées, respectivement avant et arrière, une garniture 124 de friction.

L'ensemble multidisques du deuxième embrayage E2 comporte des flasques 126 qui sont munis à leur périphérie radiale interne d'une denture 128 pour les lier en rotation avec un porte-disques 130 intérieur.

Le porte-disques 130 intérieur comporte à son extrémité radiale externe une partie axiale comportant une denture 132 externe qui engrène avec la denture 128 interne de chacun des flasques 126 pour les lier en rotation sans jeu.

Tel qu'illustré sur la figure 4, le porte-disques 130 intérieur comporte des trous 131 radiaux répartis circonférentiellement dans ladite partie axiale munie de la denture 132 et destinés à être traversés par l'huile introduite dans l'ensemble multidisques du deuxième embrayage E2.

Les disques 114 de friction sont, unitairement, axialement interposés entre deux flasques 126 consécutifs.

Chacune des garnitures 124 de friction d'un des disques 114 de friction coopère en position embrayée avec une face radiale de l'un des deux flasques 126 situés axialement de part et d'autre.

L'ensemble multidisques du deuxième embrayage E2 comporte axialement un flasque 126 à chacune de ses extrémités, respectivement un flasque 126 arrière dont la face radiale arrière est destinée à coopérer, en position embrayée, avec la partie 115 d'actionnement du piston 90 et un flasque 126 avant dont la face radiale avant est destinée à coopérer avec la face 62 arrière des moyens 60 de réaction.

Le deuxième embrayage E2 comporte des moyens 134 élastiques de rappel pour rappeler automatiquement le piston 90 en position débrayée, correspondant à un état ouvert de l'embrayage.

De préférence et comme pour le premier embrayage E1, les moyens 134 élastiques de rappel du piston 90 sont formés par des rondelles élastiques, telles que des rondelles ondulées de type «Onduflex™».

Pour transmettre directement la puissance d'entrée, le mécanisme 20 à double embrayage humide comporte des moyens de liaison qui, pour le deuxième embrayage E2, lient axialement sans jeu au moins le piston 110 d'équilibrage, le porte-disques 130 intérieur du deuxième embrayage E2 et lesdits moyens 60 de réaction.

Avantageusement, les moyens de liaison du deuxième embrayage E2 sont réalisés par rivetage.

De préférence dans ce premier mode de réalisation, lesdits moyens de liaison du deuxième embrayage E2 sont formés par des rivets 85 communs avec le premier embrayage E1 de sorte que lesdits moyens de liaison sont formés par les seuls rivets 85.

Tel que représenté sur la figure 1, les moyens de liaison du mécanisme 20 à double embrayage humide sont agencés axialement entre le piston 30 du premier embrayage E1 et le piston 90 du deuxième embrayage E2.

Les moyens de liaison lient axialement sans jeu au moins ledit voile 18 d'entraînement, le porte-disques 80 intérieur du premier embrayage E1, le porte-disques 130 intérieur du deuxième embrayage E2 et lesdits moyens 60 de réaction.

Les rivets 85 formant les moyens de liaison permettent de lier simultanément le voile 18 d'entraînement tant au premier embrayage E1 qu'au deuxième embrayage E2 du mécanisme et de transmettre directement la puissance d'entrée délivrée au système 10 par l'arbre menant.

De préférence, les moyens de liaison sont utilisés pour assurer la fixation du piston 50 d'équilibrage du premier embrayage E1 formé ici par le voile 18 et du piston 110 d'équilibrage du deuxième embrayage E2.

Avantageusement, lesdits moyens 85 de liaison lient également axialement sans jeu le piston 50 d'équilibrage du premier embrayage E1 et le piston 110 d'équilibrage du deuxième embrayage E2 du mécanisme 20.

Les moyens 60 de réaction sont interposés axialement entre le porte-disques 80 intérieur du premier embrayage E1 et le porte-disques 130 intérieur du deuxième embrayage E2 pour transmettre directement la puissance d'entrée au mécanisme 20.

Comme le voile 18 d'entraînement formant le piston 50 d'équilibrage du premier embrayage E1, le piston 110 d'équilibrage du deuxième embrayage E2 comporte des emboutis 136 qui entourent chacun un trou 138 de passage d'un des rivets 85 formant les moyens de liaison.

La tête avant de chaque rivet 85 est axialement en appui contre la face radiale avant du piston 50 d'équilibrage, ici le voile 18 d'entraînement, plus précisément est reçue à l'avant dans le logement formé par l'embouti 86 autour du trou 88.

La tête avant du rivet 85 est avantageusement comprise axialement dans l'épaisseur du voile 18 d'entraînement formant le piston 50 d'équilibrage du premier embrayage E1.

Tel que représenté sur la figure 3, ledit voile 18 d'entraînement formant le piston 50 d'équilibrage du premier embrayage E1 comporte une série de trous 88 pour le passage du corps des rivets 85.

Le porte-disques 80 intérieur du premier embrayage E1 comporte dans sa partie radiale interne une série de trous 87 axiaux pour le passage des rivets 85.

Les moyens 60 de réaction comportent une série de trous 140 axiaux (figure 1) pour le passage des rivets 85

Tel que représenté sur la figure 4, le porte-disques 130 du deuxième embrayage E2 comporte une série de trous 137 pour le passage axial des rivets 85 et le piston 110 d'équilibrage une série de trous 138.

Tel que représenté sur la coupe de la figure 1, les rivets 85 formant les moyens de liaison selon le premier mode de réalisation lient axialement ensemble sans jeu le voile 18 d'entrainement, le porte-disques 80 intérieur du premier embrayage E1, les moyens 60 de réaction, ici communs aux premier et au deuxième embrayages E1 et E2, le porte-disques 130 intérieur du deuxième embrayage E2 et le piston 110 d'équilibrage du deuxième embrayage E2.

Lorsqu'en variante, le piston 50 d'équilibrage est une pièce distincte du voile 18 d'entraînement, le piston 50 d'équilibrage est alors avantageusement également lié axialement sans jeu par les rivets 85 afin d'être maintenu en position.

Comme la tête avant, la tête arrière de chaque rivet 85 est axialement en appui contre la face radiale arrière du piston 110 d'équilibrage, plus précisément est reçue dans le logement arrière formé par l'embouti 136 autour du trou 138.

La tête arrière du rivet 85 est comprise axialement dans l'épaisseur du piston 110 d'équilibrage du deuxième embrayage E2.

Le corps de chaque rivet 85 traverse axialement, successivement de l'arrière vers l'avant, le trou 138 du piston 110 d'équilibrage, le trou 137 du porte-disques 130 intérieur de E2, le trou 140 des moyens 60 de réaction, le trou 87 du porte-disques 80 intérieur de E1, le trou 88 du voile 18 formant le piston 50 d'équilibrage du premier embrayage E1.

Les moyens de liaison formés par les rivets 85 ne font cependant pas obstacle à la circulation de l'huile radialement de l'intérieur vers l'extérieur destinée notamment à lubrifier les garnitures 74 et 124 de friction des embrayages E1 et E2.

Tel qu'illustré sur les figures 3 et 4, les emboutis 86 du voile 18 formant le piston 50 d'équilibrage, comme les emboutis 136 du piston 110 d'équilibrage, sont circonférentiellement discontinus.

Le nombre d'emboutis 86 et 136 correspond au nombre de rivets 85 utilisés pour réaliser la liaison axiale sans jeu, par exemple ici au nombre de douze.

Tel que représenté sur la figure 2, il existe grâce aux emboutis 86 un jeu axial entre la face radiale arrière du piston 50 d'équilibrage formé par le voile 18 et la face radiale avant du porte-disques 80 intérieur permettant une circulation radiale de l'huile vers l'ensemble multidisques du premier embrayage E1.

Avantageusement, des passages d'huile sont ainsi ménagés pour permettre une circulation d'huile, radialement vers l'extérieur, au niveau des moyens de liaison formés par les rivets 85.

L'huile circule, radialement de l'intérieur vers l'extérieur suivant des flèches représentées notamment sur la figure 2, en empruntant des passages F radiaux d'huile délimités circonférentiellement par deux emboutis 86 consécutifs du voile 18 formant le piston 50 d'équilibrage du premier embrayage E1 ou deux emboutis 136 circonférentiellement consécutifs du piston 110 d'équilibrage du deuxième embrayage E2.

On a représenté sur les figures 3 et 4 à l'aide de flèches quelques-uns des passages F radiaux empruntés par l'huile entre les emboutis 86, 136 dans chacun des embrayages E1 et E2 du mécanisme 20.

Pour le premier embrayage E1, le flux d'huile traverse ensuite radialement les trous 81 du porte-disques 80 intérieur pour circuler entre les disques 74 de friction et les flasques 76 de l'ensemble multidisques de E1 avant de traverser les trous radiaux du porte-disques 66 extérieur.

Pour le deuxième embrayage E2, le flux d'huile traverse radialement les trous 131 du porte-disques 130 intérieur pour circuler entre les disques 114 de friction et les flasques 126 de l'ensemble multidisques de E2 avant de traverser les trous radiaux du porte-disques 116 extérieur.

Lorsque les moyens de liaison sont réalisés par rivetage, l'étanchéité de la chambre 48 d'équilibrage du premier embrayage E1 est assurée autour des trous 88 par contact entre une face 142 annulaire, radialement plane, qui est formée à la faveur de l'embouti 86 et entoure le trou 88.

Une fois le rivetage effectué pour lier axialement les pièces ensemble, ladite face 142 annulaire coopère avec une portion 144 de la face radiale plane entourant le trou 87 du porte-disques 80 intérieur.

On a représenté sur la figure 3, en trait pointillé autour d'un des trous 87, ladite portion 144 annulaire de la face radiale du porte-disques 80 intérieur avec laquelle est en contact l'une desdites faces 142 autour d'un des trous 88 du piston 50 d'équilibrage formé par le voile 18.

L'étanchéité de la chambre 108 d'équilibrage du deuxième embrayage E2 est assurée autour des trous 138 par contact entre une face 146 annulaire, radialement plane, qui est formée à la faveur de l'embouti 136 et entoure le trou 138.

Une fois le rivetage effectué pour lier axialement les pièces ensemble, ladite face 146 annulaire coopère avec une portion 148 de la face radiale plane entourant le trou 137 du porte-disques 130 intérieur.

On a représenté sur la figure 4, en trait pointillé autour d'un des trous 137, la portion 148 annulaire de la face radiale avec laquelle est en contact l'une desdites faces 146 entourant l'un des trous 138.

On a représenté sur les figures 5 à 9, un deuxième mode de réalisation de l'invention d'un système 10 de transmission comportant un mécanisme 20 à double embrayage humide.

On décrira ci-après le deuxième mode de réalisation par comparaison avec le premier mode de réalisation, les mêmes chiffres de référence désignent des pièces identiques ou des pièces ayant des fonctions similaires.

La description du système 10 de transmission selon le premier mode de réalisation illustré par les figures 1 à 4 et tout particulièrement celle du mécanisme 20 à double embrayage humide s'applique par conséquent au deuxième mode de réalisation représenté aux figures 5 à 9.

Dans ce deuxième mode de réalisation, les moyens de liaison sont réalisés par rivetage.

En variante non représentée, lesdits moyens de liaison sont réalisés par soudage, notamment un soudage laser par transparence.

Avantageusement, lesdits moyens de liaison comportent au moins une série de premiers rivets 85A associés au premier embrayage E1 et une série de deuxièmes rivets 85B associés au deuxième embrayage E2.

Par comparaison avec les rivets 85 selon le premier mode de réalisation, chacun des rivets 85A et 85B lie axialement un nombre moindre de pièces ce qui permet d'améliorer la qualité et par tant la fiabilité de la liaison par rivetage. La longueur du rivet est ainsi réduite, permettant d'améliorer le gonflement du rivet dans son logement lors de l'opération de rivetage. La capacité de transmission de couple de la liaison par rivetage est ainsi augmentée.

De préférence, lesdits premiers rivets 85A et les deuxièmes rivets 85B sont respectivement répartis circonférentiellement de manière alternée autour de l'axe O.

Les premiers rivets 85A lient axialement sans jeu au moins ledit voile 18 d'entraînement, le porte-disque 80 intérieur du premier embrayage E1 et lesdits moyens 60 de réaction.

Comme dans le premier mode de réalisation, la partie radiale interne du voile 18 d'entraînement forme le piston 50 d'équilibrage du premier embrayage E1.

En variante non représentée, le voile 18 d'entraînement et le piston 50 d'équilibrage sont réalisés sous la forme de deux pièces distinctes, les premiers rivets 85A lient également axialement sans jeu le piston 50 d'équilibrage aux autres pièces 18, 80 et 60 afin de le maintenir en position.

Les deuxièmes rivets 85B lient axialement sans jeu au moins le piston 110 d'équilibrage du deuxième embrayage E2, le porte-disque 130 intérieur du deuxième embrayage E2 et lesdits moyens 60 de réaction.

Tel que représenté sur la figure 8, le voile 18 d'entraînement formant le piston 50 d'équilibrage du premier embrayage E1 comporte deux séries de trous, respectivement des trous 88 et des trous 150, de plus grand diamètre que les trous 88.

Les trous 88 sont traversés par les corps des premiers rivets 85A formant les moyens de liaison associés au premier embrayage E1 et les trous 150 sont destinés à permettre un passage, axialement à travers le voile 18 d'entrainement, pour le rivetage des deuxièmes rivets 85B formant les moyens de liaison associés au deuxième embrayage E2.

Comme les trous 88, chaque trou 150 est formé au centre d'un embouti 152 et entouré par une face 154 annulaire pour assurer l'étanchéité par coopération avec une portion de la face radiale du porte-disques 80 intérieur de l'embrayage E1.

Le porte-disques 80 intérieur du premier embrayage E1 comporte également des trous 87 pour le passage des corps des rivets 85A et des trous 156 qui sont alignés axialement avec les trous 150 du voile 18 d'entraînement pour le passage des deuxièmes rivets 85B.

Tel que représenté sur la figure 9, le porte-disque 130 intérieur du deuxième embrayage E2 comporte des trous 137 traversés par les corps des rivets 85B et des trous 158, de plus grand diamètre que les trous 137.

Les trous 158 sont alignés avec des trous 160 du piston 110 d'équilibrage du deuxième embrayage E2 pour le passage des premiers rivets 85A.

Le piston 110 d'équilibrage du deuxième embrayage E2 comporte deux séries de trous, respectivement des trous 138 comme dans le premier mode de réalisation et des trous 160.

Les trous 138 sont traversés par les corps des deuxièmes rivets 85B formant les moyens de liaison associés au deuxième embrayage E2 et les trous 160 sont destinés à permettre le rivetage des premiers rivets 85A.

Comme les trous 138, chaque trou 160 est formé au centre d'un embouti 162 et entouré par une face 164 annulaire coopérant avec la face radiale en vis-à-vis du porte-disques 130 intérieur axialement adjacent pour assurer l'étanchéité de la chambre 108 d'équilibrage du deuxième embrayage E2.

Dans ce deuxième mode de réalisation et tel qu'illustré sur la figure 7, des passages F radiaux d'huile sont ménagés pour permettre une circulation d'huile, radialement vers l'extérieur, au niveau des moyens de liaison formés par les premiers rivets 85A et les deuxièmes rivets 85B.

Le passage F de l'huile s'effectue radialement entre les emboutis 86 et 152 pour le premier embrayage E1 et entre les emboutis 136 et 162 pour le deuxième embrayage E2, lesdits emboutis étant circonférentiellement discontinus.

Comme pour le premier mode de réalisation, le passage F radial de l'huile a été représenté schématiquement sur les figures 8 et 9 par quelques flèches.

Bien entendu la circulation de l'huile s'effectue radialement sur l'ensemble de la circonférence tant du piston 50 d'équilibrage formé par le voile 18 que du piston 110 d'équilibrage du deuxième embrayage E2 et cela bien que lesdites flèches n'aient pas été représentées sur l'ensemble de la circonférence.

On a représenté sur les figures 10 à 15, un troisième mode de réalisation de l'invention d'un système 10 de transmission comportant un mécanisme 20 à double embrayage humide.

On décrira ci-après le troisième mode de réalisation par comparaison avec le deuxième mode de réalisation, les mêmes chiffres de référence sur les figures désignant des pièces identiques ou des pièces ayant des fonctions similaires.

La description des moyens de liaison du système 10 de transmission faite précédemment pour le deuxième mode de réalisation représenté aux figures 5 à 9 ainsi que celle générale du mécanisme 20 à double embrayage humide faite pour le premier mode de réalisation illustré par les figures 1 à 4 s'applique par conséquent au troisième mode de réalisation.

En effet, les moyens de liaison selon ce troisième mode de réalisation sont réalisés par rivetage au moyen de deux séries de rivets, respectivement des premiers rivets 85A et des deuxièmes rivets 85B comme dans le deuxième mode de réalisation.

En variante non représentée, les moyens de liaison sont formés par une seule série de rivets 85, comme dans le premier mode de réalisation.

De préférence, le piston 50 d'équilibrage du premier embrayage E1 est constitué par le voile 18 d'entraînement qui assure comme précédemment une double fonction, d'une part de transmission de la puissance d'entrée et, d'autre part, de fonctionnement de la chambre 48 d'équilibrage du premier embrayage E1.

Le piston 50 d'équilibrage formé par le voile 18 et le piston 110 d'équilibrage du deuxième embrayage E2 sont dans ce troisième mode de réalisation dépourvus d'emboutis.

Par comparaison avec le deuxième mode de réalisation, les emboutis 86 dans le piston 50 d'équilibrage formé par le voile 18 et les emboutis 136 dans le piston 110 d'équilibrage du deuxième embrayage E2 sont supprimés.

Avantageusement, la suppression des emboutis permet notamment de réduire l'encombrement axial de l'ensemble des pièces liées axialement sans jeu par les premiers rivets 85A et les deuxièmes rivets 85B.

Tel que décrit précédemment, le mécanisme 20 comporte des passages F d'huile pour permettre une circulation de l'huile radialement de l'intérieur vers l'extérieur au niveau des moyens de liaison réalisés par rivetage.

Avantageusement, la circulation radiale de l'huile s'effectue dans ce troisième mode de réalisation à travers des fenêtres de passage ménagées, pour le premier embrayage E1, entre le porte-disques 80 intérieur et le voile 18 et, pour le deuxième embrayage E2, entre le porte-disque 130 intérieur et le piston 110 d'équilibrage.

Le premier embrayage E1 comporte circonférentiellement des fenêtres 166 de passage d'huile obtenues par des découpes 168 réalisées dans le porte-disques 80 intérieur.

Tel que représenté sur la figure 13, le porte-disques 80 intérieur du premier embrayage E1 comporte circonférentiellement une alternance de découpes 168, délimitées radialement vers l'extérieur par un bord 170, et de pattes 172 de fixation pour la liaison axiale par rivetage du porte-disques 80 intérieur.

Les pattes 172 de fixation s'étendent radialement vers l'intérieur par rapport au bord 170 extérieur des découpes 168.

Les pattes 172 de fixation comportent en alternance des trous 87 pour le passage des corps des rivets 85A et, de plus grand diamètre que les trous 87, des trous 156 pour le rivetage des rivets 85B.

En variante non représentée, les moyens de liaison sont formés par des rivets 85 comme dans le premier mode de réalisation et les pattes 172 de fixation comportent alors uniquement des trous 87 pour le passage des rivets 85.

Les découpes 168 sont réalisées de manière que le bord 170 extérieur se trouve sur un rayon R1 qui est supérieur au rayon R du bord 174 supérieur du voile 18 d'entraînement formant le piston 50 d'équilibrage du premier embrayage E1.

De préférence, le voile 18 comporte une portion 176 coudée dans le prolongement, radialement vers l'extérieur, du bord 174.

Les trous 88 et 150 du voile 18 d'entraînement débouchent dans une face 178 radiale arrière, qui est circonférentiellement continue et plane, et avec laquelle une face 180 radiale avant des pattes 172 de fixation coopère lorsque la liaison axiale sans jeu par rivetage est réalisée.

Tel que représenté sur la figure 12, l'huile circule entre le porte-disques 80 intérieur et le voile 18 en passant radialement par les découpes 168, entre les pattes 172 de fixation, et emprunte les fenêtres 166 de passage délimitées radialement à l'intérieur par le bord 174 du voile et radialement à l'extérieur par le bord 170.

Les caractéristiques (forme, dimensions, section de passage, et.) d'une fenêtre 166 de passage sont notamment déterminées par la différence entre le rayon R1 du bord 170 et le rayon R du bord 174 du voile 18 d'entraînement, la fenêtre 166 sera d'autant plus importante que la différence sera grande.

La forme du bord 170 extérieur participe également à déterminer les caractéristiques d'une fenêtre 166 de passage, ledit bord 170 illustré sur les figures 13 et 14 étant curviligne.

En variante, le bord 170 extérieur de la découpe 168 est globalement rectiligne et circonférentiellement plus large de manière à former par exemple, avec les pattes 172 de fixation, un profil « en créneau ».

Le deuxième embrayage E2 comporte circonférentiellement des fenêtres 182 de passage d'huile entre le porte-disque 130 intérieur et le piston 110 d'équilibrage, lesdites fenêtres 182 de passage d'huile étant obtenues par des découpes 184 réalisées dans le porte-disques 130 intérieur.

Tel que représenté sur la figure 14, le porte-disques 130 intérieur comporte circonférentiellement une alternance de découpes 184 délimitées radialement vers l'extérieur par un bord 186.

Le porte-disques 130 intérieur du deuxième embrayage E2 comporte des pattes 188 de fixation pour la liaison axiale sans jeu par rivetage du porte-disques 130 intérieur, dans ce troisième mode de réalisation la liaison du porte-disques 130 intérieur avec les moyens 60 de réaction et le piston 110 d'équilibrage par les deuxièmes rivets 85B.

Les pattes 188 de fixation s'étendent radialement vers l'intérieur par rapport au bord 186 extérieur délimitant radialement chaque découpe 184.

La partie radialement interne du porte-disques 130 intérieur est constituée d'une alternance de découpes 184 et de pattes 188 de fixation, deux pattes 188 consécutives étant séparées par une découpe 184.

Les pattes 188 de fixation comportent en alternance des trous 137 pour le passage du corps des rivets 85B et, de plus grand diamètre que les trous 137, des trous 158 pour le rivetage des rivets 85A.

En variante non représentée, les moyens de liaison sont formés par des rivets 85 comme dans le premier mode de réalisation et les pattes 188 de fixation comportent alors uniquement des trous 137 pour le passage du corps des rivets 85.

Tel que décrit pour le premier embrayage E1, les découpes 184 ménagées dans le porte-disques 130 intérieur du deuxième embrayage E2 sont réalisées de manière que le bord 186 extérieur se trouve sur un rayon R2 qui soit supérieur au rayon R' du bord 200 du piston 110 d'équilibrage.

De préférence, le piston 110 d'équilibrage comporte une portion 202 coudée dans le prolongement, radialement vers l'extérieur, du bord 200.

Les trous 138 et 160 du piston 110 d'équilibrage débouchent dans une face 204 radiale avant qui est plane et circonférentiellement continue.

La face 204 radiale avant coopère avec une face 206 radiale arrière des pattes 188 de fixation après la liaison axiale par rivetage du piston 110 d'équilibrage et du porte-disques 130 intérieur effectuée.

Tel que représenté sur la figure 12, l'huile circule entre le porte-disques 130 intérieur et le piston 110 d'équilibrage en passant radialement par les découpes 184, à défaut l'huile serait bloquée au niveau des rivets 85B qui serrent axialement ensemble le porte-disques 130 intérieur et le piston 110 d'équilibrage.

L'huile emprunte les fenêtres 182 de passage qui sont chacune délimitées radialement à l'intérieur par le bord 200 du piston 110 d'équilibrage et, radialement à l'extérieur, par le bord 186 de la découpe 184 dans le porte-disques 130 intérieur.

Les caractéristiques d'une fenêtre 182 de passage sont notamment déterminées par la différence entre le rayon R2 du bord 186 extérieur de la découpe et le rayon R' du bord 200 du piston 110 d'équilibrage, ainsi que par la forme de la découpe et tout particulièrement celle de son bord 186 extérieur.

L'huile traverse les fenêtres 182 de passage réparties circonférentiellement entre le porte-disques 130 intérieur et le piston 110 d'équilibrage en s'écoulant entre le bord 186 extérieur et la portion 202 coudée puis poursuit son parcours radialement vers l'extérieur en direction de l'ensemble multidisques du deuxième embrayage E2 en traversant la partie axiale du porte-disques 130 intérieur par les trous 131 radiaux.

## Revendications

1. Système (10) de transmission, notamment pour un véhicule automobile, comportant autour d'un axe (O) au moins :
- une coquille (12) d'entrée qui est liée en rotation à un arbre menant et à un voile (18) d'entrainement pour lier en rotation ladite coquille (12) d'entrée à un mécanisme (20) à double embrayage humide qui est commandé pour accoupler sélectivement ledit arbre menant à un premier arbre (A1) mené et à un deuxième arbre (A2) mené,
ledit mécanisme (20) à double embrayage humide comportant au moins un premier embrayage (E1) et un deuxième embrayage (E2) respectivement de type multidisques, chacun desdits premier et deuxième embrayages (E1, E2) comportant au moins un piston (30, 90) mobile axialement qui est commandé en déplacement au moyen d'une chambre (32, 92) de commande à laquelle est associée une chambre (48, 108) d'équilibrage délimitée au moins par un piston (50, 110) d'équilibrage, ledit piston (30, 90) venant serrer axialement dans une position embrayée un ensemble multi-disques contre des moyens (60) de réaction, ledit ensemble multidisques comportant au moins des disques (64, 114) de friction liés en rotation à un porte-disques (66, 116) extérieur et des flasques (76, 126) qui sont liés en rotation par au moins un porte-disques (80, 130) intérieur à l'un desdits premier et deuxième arbres (A1, A2) menés,
**caractérisé en ce que** le voile (18) d'entraînement, le porte-disques (80) intérieur du premier embrayage (E1), le porte-disques (130) intérieur du deuxième embrayage (E2) et lesdits moyens (60) de réaction interposés axialement entre lesdits porte-disques (80, 130) intérieur sont des pièces distinctes et
**en ce que** ledit mécanisme (20) à double embrayage humide comporte des moyens (85) de liaison agencés axialement entre les pistons (30, 90) du premier embrayage (E1) et du deuxième embrayage (E2) qui, pour transmettre directement la puissance d'entrée, lient ensemble axialement sans jeu au moins les pièces distinctes.

2. Système selon la revendication 1, **caractérisé en ce que** lesdits moyens (85) de liaison lient également axialement sans jeu le piston (50) d'équilibrage du premier embrayage et le piston (110) d'équilibrage du deuxième embrayage (E2).

3. Système selon la revendication 1 ou 2, **caractérisé en ce que** lesdits moyens (85) de liaison sont réalisés par rivetage.

4. Système selon la revendication 3, **caractérisé en ce que** lesdits moyens (85) de liaison comportent au moins une série de premiers rivets (85A) associés au premier embrayage (E1) et une série de deuxièmes rivets (85B) associés au deuxième embrayage (E2).

5. Système selon la revendication 4, **caractérisé en ce que** lesdits premiers rivets (85A) lient axialement sans jeu au moins ledit voile (18) d'entraînement, le porte-disque (80) intérieur du premier embrayage (E1) et lesdits moyens (60) de réaction.

6. Système selon la revendication 4, **caractérisé en ce que** lesdits deuxièmes rivets (85B) lient axialement sans jeu au moins le porte-disque (130) intérieur du deuxième embrayage (E2) et lesdits moyens (60) de réaction.

7. Système selon l'une quelconque des revendications précédentes, **caractérisé en ce que** des passages (F) d'huile sont ménagés pour permettre une circulation d'huile, radialement vers l'extérieur, au niveau des moyens (85) de liaison.

8. Système selon la revendication 7, **caractérisé en ce que** le piston (50) d'équilibrage du premier embrayage (E1) et le piston (110) d'équilibrage du deuxième embrayage (E2) comportent des emboutis (86, 136) délimitant, entre deux emboutis circonférentiellement consécutifs, lesdits passages (F) radiaux d'huile.

9. Système selon la revendication 7, **caractérisé en ce que** lesdits passages (F) radiaux d'huile sont constitués par des fenêtres (166, 182) obtenues par découpe, entre des pattes (172, 188) de fixation circonférentiellement consécutives, du porte-disques (80, 130) intérieur.

10. Système selon l'une quelconque des revendications précédentes, **caractérisé en ce que** le voile (18) d'entraînement comporte des ouvertures (56) pour le passage axial d'une partie (54) d'actionnement du piston (30) du premier embrayage (E1).

11. Système selon l'une quelconque des revendications précédentes, **caractérisé en ce que** le voile (18) d'entraînement constitue le piston (50) d'équilibrage du premier embrayage (E1).

12. Système selon l'une quelconque des revendications précédentes, **caractérisé en ce que** le premier embrayage (E1) et le deuxième embrayage (E2) dudit mécanisme (20) à double embrayage humide sont axialement juxtaposés, le premier embrayage (E1) et le deuxième embrayage (E2) étant agencés axialement de part et d'autre desdits moyens (60) de réaction.

13. Système selon l'une quelconque des revendications précédentes, **caractérisé en ce que** le piston (30) du premier embrayage (E1) et le piston (90) du deuxième embrayage (E2) dudit mécanisme (20) se déplacent axialement en sens opposé pour venir serrer lesdits disques (64, 114) de friction associés en position embrayée.

14. Système selon la revendication 1 ou 2, **caractérisé en ce que** lesdits moyens de liaison sont réalisés par soudage.

15. Système selon l'une quelconque des revendications précédentes, **caractérisé en ce que** lesdits moyens de liaison sont implantés radialement entre l'axe O et l'ensemble multidisques.

## Patentansprüche

1. Übertragungssystem (10), insbesondere für ein Kraftfahrzeug, welches um eine Achse (O) herum wenigstens umfasst:
- eine Eingangsschale (12), welche mit einer Antriebswelle und mit einer Antriebsscheibe (18) drehfest verbunden ist, um die Eingangsschale (12) mit einem nassen Doppelkupplungsmechanismus (20) drehfest zu verbinden, welcher gesteuert wird, um die Antriebswelle selektiv mit einer ersten Abtriebswelle (A1) und mit einer zweiten Abtriebswelle (A2) zu verbinden,
wobei der nasse Doppelkupplungsmechanismus (20) wenigstens eine erste Kupplung (E1) und eine zweite Kupplung (E2), die jeweils vom Typ einer Mehrscheibenkupplung sind, umfasst, wobei die erste und die zweite Kupplung (E1, E2) jeweils wenigstens einen axial beweglichen Kolben (30, 90) umfassen, dessen Verschiebung mittels einer Steuerkammer (32, 92) gesteuert wird, welcher eine Ausgleichskammer (48, 108) zugeordnet ist, die wenigstens von einem Ausgleichskolben (50, 110) begrenzt wird, wobei der Kolben (30, 90) eine Mehrscheibenanordnung in einer eingekuppelten Position axial gegen Reaktionsmittel (60) presst, wobei die Mehrscheibenanordnung wenigstens Reibscheiben (64, 114), die drehfest mit einem äußeren Scheibenträger (66, 116) verbunden sind, und Seitenstücke (76, 126), welche über wenigstens einen inneren Scheibenträger (80, 130) drehfest mit einer von der ersten und der zweiten Abtriebswelle (A1, A2) verbunden sind, umfasst, **dadurch gekennzeichnet, dass** die Antriebsscheibe (18), der innere Scheibenträger (80) der ersten Kupplung (E1), der innere Scheibenträger (130) der zweiten Kupplung (E2) und die axial zwischen den inneren Scheibenträgern (80, 130) angeordneten Reaktionsmittel (60) verschiedene Teile sind, und dadurch, dass der nasse Doppelkupplungsmechanismus (20) axial zwischen den Kolben (30, 90) der ersten Kupplung (E1) und der zweiten Kupplung (E2) angeordnete Verbindungsmittel (85) umfasst, welche, um die Eingangsleistung direkt zu übertragen, wenigstens die verschiedenen Teile axial ohne Spiel miteinander verbinden.

2. System nach Anspruch 1, **dadurch gekennzeichnet, dass** die Verbindungsmittel (85) auch den Ausgleichskolben (50) der ersten Kupplung und den Ausgleichskolben (110) der zweiten Kupplung (E2) axial ohne Spiel verbinden.

3. System nach Anspruch 1 oder 2, **dadurch gekennzeichnet, dass** die Verbindungsmittel (85) durch Vernieten realisiert sind.

4. System nach Anspruch 3, **dadurch gekennzeichnet, dass** die Verbindungsmittel (85) wenigstens eine Reihe von ersten Nieten (85A), die der ersten Kupplung (E1) zugeordnet sind, und eine Reihe von zweiten Nieten (85B), die der zweiten Kupplung (E2) zugeordnet sind, umfassen.

5. System nach Anspruch 4, **dadurch gekennzeichnet, dass** die ersten Niete (85A) wenigstens die Antriebsscheibe (18), den inneren Scheibenträger (80) der ersten Kupplung (E1) und die Reaktionsmittel (60) axial ohne Spiel verbinden.

6. System nach Anspruch 4, **dadurch gekennzeichnet, dass** die zweiten Niete (85B) wenigstens den inneren Scheibenträger (130) der zweiten Kupplung (E2) und die Reaktionsmittel (60) axial ohne Spiel verbinden.

7. System nach einem der vorhergehenden Ansprüche, **dadurch gekennzeichnet, dass** Öldurchlässe (F) dafür ausgebildet sind, eine Zirkulation von Öl an den Verbindungsmitteln (85) radial nach außen zu ermöglichen.

8. System nach Anspruch 7, **dadurch gekennzeichnet, dass** der Ausgleichskolben (50) der ersten Kupplung (E1) und der Ausgleichskolben (110) der zweiten Kupplung (E2) Einprägungen (86, 136) aufweisen, die zwischen zwei in Umfangsrichtung aufeinander folgenden Einprägungen die radialen Öldurchlässe (F) begrenzen.

9. System nach Anspruch 7, **dadurch gekennzeichnet, dass** die radialen Öldurchlässe (F) aus Fenstern (166, 182) bestehen, die durch Schneiden, zwischen in Umfangsrichtung aufeinander folgenden Befestigungslaschen (172, 188), des inneren Scheibenträgers (80, 130) erhalten werden.

10. System nach einem der vorhergehenden Ansprüche, **dadurch gekennzeichnet, dass** die Antriebsscheibe (18) Öffnungen (56) für den axialen Durchgang eines Betätigungsteils (54) des Kolbens (30) der ersten Kupplung (E1) umfasst.

11. System nach einem der vorhergehenden Ansprüche, **dadurch gekennzeichnet, dass** die Antriebsscheibe (18) den Ausgleichskolben (50) der ersten Kupplung (E1) bildet.

12. System nach einem der vorhergehenden Ansprüche, **dadurch gekennzeichnet, dass** die erste Kupplung (E1) und die zweite Kupplung (E2) des nassen Doppelkupplungsmechanismus (20) axial nebeneinander angeordnet sind, wobei die erste Kupplung (E1) und die zweite Kupplung (E2) axial beiderseits der Reaktionsmittel (60) angeordnet sind.

13. System nach einem der vorhergehenden Ansprüche, **dadurch gekennzeichnet, dass** der Kolben (30) der ersten Kupplung (E1) und der Kolben (90) der zweiten Kupplung (E2) des Mechanismus (20) sich axial in entgegengesetzter Richtung bewegen, um die zugeordneten Reibscheiben (64, 114) in der eingekuppelten Position festzuklemmen.

14. System nach Anspruch 1 oder 2, **dadurch gekennzeichnet, dass** die Verbindungsmittel durch Schweißen realisiert sind.

15. System nach einem der vorhergehenden Ansprüche, **dadurch gekennzeichnet, dass** die Verbindungsmittel radial zwischen der Achse O und der Mehrscheibenanordnung eingebaut sind.

## Claims

1. A transmission system (10), especially for a motor vehicle, having around an axis (O) at least an input shell (12) that is rotationally connected to a driving shaft and to a drive web (18) in order to rotationally connect said input shell (12) to a double wet clutch mechanism (20) that is controlled to selectively couple said driving shaft to a first driven shaft (A1) and to a second driven shaft (A2),
said double wet clutch mechanism (20) having at least a first clutch (E1) and a second clutch (E2) respectively of the multiple-disc type, each of said first and second clutches (E1, E2) having at least one axially movable piston (30, 90) that is controlled as to displacement by means of a control chamber (32, 92) with which is associated a compensating chamber (48, 108) delimited at least by a compensating piston (50, 110), said piston (30, 90) causing axial clamping, in an engaged position, of a multiple-disc assemblage against reaction means (60), said multiple-disc assemblage having at least friction discs (64, 114) rotationally connected to an external disc carrier (66, 116) and flanges (76, 126) that are rotationally connected via at least one internal disc carrier (80, 130) to one of said first and second driven shafts (A1, A2),
**Characterized in that** the drive web (18), the internal disc carrier (80) of the first clutch (E1), the internal disc carrier (130) of the second clutch (E2), and said reaction means (60) interposed axially between said internal disc carriers (80, 130) are separate parts;
and said double wet clutch mechanism (20) has connecting means (85) arranged axially between the pistons (30, 90) of the first clutch (E1) and of the second clutch (E2) which, for direct transmission of input power, connect at least the separate parts together with zero axial clearance.

2. The system according to claim 1, **characterized in that** said connecting means (85) also connect, with zero axial clearance, the compensating piston (50) of the first clutch and the compensating piston (110) of the second clutch (E2).

3. The system according to claim 1 or 2, **characterized in that** said connecting means (85) are implemented by riveting.

4. The system according to claim 3, **characterized in that** said connecting means (85) have at least a series of first rivets (85A) associated with the first clutch (E1) and a series of second rivets (85B) associated with the second clutch (E2).

5. The system according to claim 4, **characterized in that** said first rivets (85A) connect, with zero axial clearance, at least said drive web (18), the internal disc carrier (80) of the first clutch (E1), and said reaction means (60).

6. The system according to claim 4, **characterized in that** said second rivets (85B) connect, with zero axial clearance, at least the internal disc carrier (130) of the second clutch (E2) and said reaction means (60).

7. The system according to any one of the preceding claims, **characterized in that** oil passages (F) are configured to allow oil circulation radially outward at the level of the connecting means (85).

8. The system according to claim 7, **characterized in that** the compensating piston (50) of the first clutch (E1) and the compensating piston (110) of the second clutch (E2) have indentations (86, 136) that delimit, between two circumferentially consecutive indentations, said radial oil passages (F).

9. The system according to claim 7, **characterized in that** said radial oil passages (F) are constituted by windows (166, 182) obtained by cutting out the internal disc carrier (80, 130) between circumferentially consecutive fastening tabs (172, 188).

10. The system according to any one of the preceding claims, **characterized in that** the drive web (18) has openings (56) for axial passage of an actuating portion (54) of the piston (30) of the first clutch (E1).

11. The system according to any one of the preceding claims, **characterized in that** the drive web (18) constitutes the compensating piston (50) of the first clutch (E1).

12. The system according to any one of the preceding claims, **characterized in that** the first clutch (E1) and the second clutch (E2) of said double wet clutch mechanism (20) are axially juxtaposed, the first clutch (E1) and the second clutch (E2) being arranged axially on either side of said reaction means (60).

13. The system according to any one of the preceding claims, **characterized in that** the piston (30) of the first clutch (E1) and the piston (90) of the second clutch (E2) of said mechanism (20) travel axially in opposite directions in order to cause clamping of said associated friction discs (64, 114) in an engaged position.

14. The system according to claim 1 or 2, **characterized in that** said connecting means are implemented by welding.

15. The system according to any one of the preceding claims, **characterized in that** said connecting means are installed radially between the axis O and the multiple-disc assemblage.
